# EUROPEAN PATENT APPLICATION

(11) **EP 4 838 774 A1**
(43) Date of publication of application: **11.11.2026**
(21) Application number: 25916082.8
(22) Date of filing: 24.12.2025
(51) Int. Cl.: H02M 1/36, H02M 1/00, H02M 1/32, H02J 3/48, H02J 3/50

(54) **POWER CONVERTER START-UP CONTROL METHOD, CONTROLLER, AND POWER CONVERSION SYSTEM**

(30) Priority: 31.12.2024 CN 202411998364
(71) Applicant: Shanghai Moorewatt Energy Technology Co., Ltd., Shanghai 200131 (CN)
(72) Inventor: MAO, Qiongyi, Shanghai 200131 (CN); WU, Guilong, Shanghai 200131 (CN)
(74) Representative: Zacco Sweden AB
(86) International application number: PCT/CN2025/145207
(87) International publication number: WO 2026/145206

(57) **Abstract**

A power converter start-up control method, a controller, and a power conversion system. The method comprises: acquiring a grid voltage corresponding to a power converter, an active power command, and a reactive power command (302); on the basis of the grid voltage, the active power command, and the reactive power command, calculating a target stat-up interval and a current command (304), the target start-up interval being located between a first time threshold and a second time threshold; and starting, within the target start-up interval, the power converter according to the current command (306).

## Description

### CROSS-REFERENCE TO RELATED APPLICATION

This disclosure claims priority to Chinese Patent Application No. 2024119983643, filed on December 31, 2024, and entitled "POWER CONVERTER STARTUP CONTROL METHOD, CONTROLLER, AND POWER CONVERSION SYSTEM," the entire contents of which are incorporated herein by reference.

### TECHNICAL FIELD

The present disclosure relates to the field of power conversion technology, and in particular, to a power converter startup control method, a controller, and a power conversion system.

### BACKGROUND

A power converter is a power conversion device for converting electrical power from one form to another, so as to achieve power transmission and control under different power requirements. The power converter can convert direct current (DC) power generated by DC power supply devices such as photovoltaic panels into alternating current (AC) power and transmit it to a power grid system, thereby achieving grid-connection of the DC power supply devices.

In scenarios such as startup of the power converter, low-voltage or high-voltage ride-through during grid-connection, and light-load control of the power converter, it is necessary to control the startup process of the power converter to ensure the startup reliability of the power converter.

### SUMMARY

In view of the above, it is necessary to address the above technical issues by providing a power converter startup control method, a controller, and a power conversion system that can ensure the reliability of startup of the power converter.

In a first aspect, the present disclosure provides a power converter startup control method, including:
obtaining a grid voltage, an active power command, and a reactive power command corresponding to the power converter;
calculating a target startup interval and a current command based on the grid voltage, the active power command, and the reactive power command, and the target startup interval being located between a first time threshold and a second time threshold; and
starting the power converter within the target startup interval and based on the current command.

In one of the embodiments, the current command includes an active current command and a reactive current command, and wherein calculating the target startup interval and the current command based on the grid voltage, the active power command, and the reactive power command includes:
determining the first time threshold and the second time threshold based on an instantaneous value or a phase of the grid voltage;
determining the active current command based on the active power command and the grid voltage; and
determining the reactive current command based on the reactive power command and the grid voltage.

In one of the embodiments, starting the power converter within the target startup interval and based on the current command includes:
starting the power converter within the target startup interval with a reactive current of zero when a reactive power indicated by the reactive power command is greater than a power threshold; and
controlling the reactive current of the power converter to reach a target reactive current indicated by the reactive current command based on a preset gradient step size.

In one of the embodiments, starting the power converter within the target startup interval and based on the current command includes: starting the power converter within the target startup interval and based on a target reactive current indicated by the reactive current command when a reactive power indicated by the reactive power command is less than or equal to a power threshold.

In one of the embodiments, calculating the target startup interval and the current command based on the grid voltage, the active power command, and the reactive power command includes:
determining an offset phase based on the reactive power command and the active power command when a reactive power corresponding to the reactive power command is greater than a power threshold;
obtaining the first time threshold and the second time threshold based on the offset phase and an amplitude or a phase of the grid voltage;
determining the active current command based on the active power command and the grid voltage; and
determining the reactive current command based on the reactive power command and the grid voltage.

In one of the embodiments, the method further includes: obtaining the active power command based on a maximum power point of an energy device corresponding to the power converter.

In one of the embodiments, the method further includes: obtaining the active power command based on a dispatching demand of a power grid system.

In one of the embodiments, the power converter includes a direct current (DC)-side circuit, a transformer, and an alternating current (AC)-side circuit. The DC-side circuit includes an actively-driven full-bridge circuit, and the AC-side circuit includes an actively-driven bidirectional switching half-bridge circuit.

In one of the embodiments, the AC-side circuit includes a resonant inductor. Instantaneous values of currents of the resonant inductor at the first time threshold and at the second time threshold are each less than a current threshold.

In a second aspect, the present disclosure further provides a controller. The controller is connected to a power converter and includes a memory and a processor. The memory has a computer program stored thereon, and the processor, when executing the computer program, performs steps of the method according to the first aspect.

In a third aspect, the present disclosure further provides a power conversion system. The power conversion system includes a power converter and the controller provided in the second aspect above. The power converter includes a DC-side circuit, a transformer, and an AC-side circuit. The DC-side circuit includes an actively-driven full-bridge circuit, and the AC-side circuit includes an actively-driven bidirectional switching half-bridge circuit.

According to the power converter startup control method, the controller, and the power conversion system above, the method includes: obtaining a grid voltage, an active power command, and a reactive power command corresponding to the power converter; calculating a target startup interval and a current command based on the grid voltage, the active power command, and the reactive power command, and the target startup interval being located between a first time threshold and a second time threshold; and starting the power converter within the target startup interval and based on the current command. In this way, in various startup scenarios of the power converter, upon receiving an externally input startup command or an internally determined startup-enabling command, the power converter is not started directly. Instead, the target startup interval and the current command are determined by tracking the grid voltage, the active power command, and the reactive power command, and the power converter is started within the target startup interval and based on the current command. Exemplarily, a startup control device is provided in the power converter, and the startup control device includes two input terminals and two output terminals. One input terminal is used for inputting the grid voltage, the other input terminal is used for inputting the active power command and the reactive power command. One output terminal is used for outputting the target startup interval, and the other output terminal is used for outputting the current command. The power converter is started based on the target startup interval and the current command outputted by the startup control device. Starting the power converter within the target startup interval and based on the current command can reduce the current impact on each power switch of the power converter during startup, avoid damage to the power switches, and improve the reliability of startup of the power converter.

### BRIEF DESCRIPTION OF THE DRAWINGS

In order to illustrate the technical solutions in the embodiments of the present disclosure or in the related art more clearly, the accompanying drawings required in the description of the embodiments or the related art will be briefly introduced below. Obviously, the drawings in the following description are only embodiments of the present disclosure, and for those of ordinary skill in the art, other drawings can be obtained based on the disclosed drawings without creative efforts.
FIG. 1 is a diagram showing an application environment of a power converter startup control method according to an embodiment;
FIG. 2 is a schematic diagram showing a circuit topology of a power converter to which a power converter startup control method is applied according to an embodiment;
FIG. 3 is a schematic flowchart of the power converter startup control method according to an embodiment;
FIG. 4 is a schematic diagram showing a relationship between a current waveform of a resonant inductor of a power converter and a grid voltage waveform according to an embodiment;
FIG. 5 is a schematic diagram showing input and output of a startup control device according to an embodiment;
FIG. 6 is a schematic flowchart of a procedure of obtaining a target startup interval and a current command according to an embodiment;
FIG. 7 is a schematic diagram showing a process of determining a first time threshold and a second time threshold according to an instantaneous value of a grid voltage according to an embodiment;
FIG. 8 is a schematic flowchart of a procedure of starting a power converter within a target startup interval according to a current command in an embodiment; and
FIG. 9 is a schematic flowchart of a procedure of obtaining a target startup interval and a current command according to another embodiment.

### DETAILED DESCRIPTION OF THE EMBODIMENTS

The technical solutions in the embodiments of the present disclosure will be clearly and completely described below with reference to the accompanying drawings in the embodiments of the present disclosure. Obviously, the described embodiments are only some, but not all, of the embodiments of the present disclosure. Based on the embodiments of the present disclosure, all other embodiments obtained by a person of ordinary skill in the art without creative efforts shall fall within the protection scope of the present disclosure.

Unless otherwise defined, all technical and scientific terms used herein have the same meaning as commonly understood by those of ordinary skill in the art to which the present disclosure belongs. The terms used in the specification of the present disclosure herein are only for the purpose of describing specific embodiments, but are not intended to limit the present disclosure.

It can be understood that the terms "first", "second", etc., used in the present disclosure, may be used herein to describe various elements, but these elements are not limited by these terms. These terms are only used to distinguish one element from another. For example, without departing from the scope of the present disclosure, a first resistor may be referred to as a second resistor, and similarly, and a second resistor may be referred to as a first resistor. Both the first resistor and the second resistor are resistors, but they are not the same resistor.

It can be understood that, if there are transmissions of electrical signals or data between circuits, modules, units, etc., that are "connected" in the following embodiments, the "connection" should be understood as "electrical connection", or "communication connection", etc.

It can be understood that the term "based on" as used in the present disclosure is used to describe one or more factors that influence a determination and does not exclude other factors that may influence the determination. For example, the phrase "determining *A* based on *B*" means that the determination of *A* may be based entirely on or at least in part on factor *B*, that is, *B* is a factor that influences the determination of *A*, but does not exclude that the determination of *A* may also be based on *C*.

As used herein, the singular forms "a", "an", and "the" may also include the plural forms unless the context clearly dictates otherwise. It can also be understood that the terms "comprising/including" or "having", etc., specify the presence of stated features, integers, steps, operations, components, parts, or combinations thereof, but do not preclude the possibility of the presence or addition of one or more other features, integers, steps, operations, components, parts, or combinations thereof. Moreover, the term "and/or" used in this specification includes any and all combinations of the associated listed items.

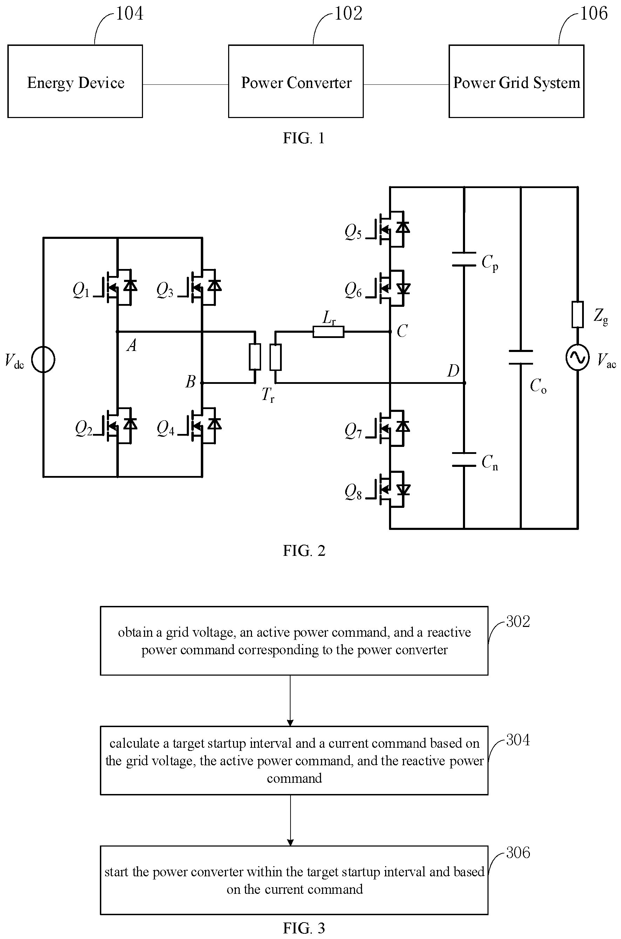

In an exemplary embodiment, the provided power converter startup control method can be applied in the application environment shown in FIG. 1, wherein a DC side of a power converter 102 is connected to an energy device 104, and an AC side of the power converter 102 is connected to a power grid system 106, and the power converter 102 is configured for converting DC power generated by the energy device 104 into AC power and transmitting it to the power grid system 106, so as to achieve grid-connected power generation of the energy device 104. Exemplarily, the energy device 104 may be a photovoltaic module.

In an exemplary embodiment, referring to FIG. 2, the power converter comprises a DC-side circuit, a transformer, and an AC-side circuit. The DC-side circuit includes an actively-driven full-bridge circuit, and the AC-side circuit includes an actively-driven bidirectional switching half-bridge circuit.

Exemplarily, as shown in FIG. 2, a first bridge arm circuit of the full-bridge circuit includes a power switch Q₁ and a power switch Q₂, and a second bridge arm circuit includes a power switch Q₃ and a power switch Q₄, where points *A* and *B* represent load interfaces of the full-bridge circuit, and Tᵣ represents a transformer. An upper bridge arm circuit of the bidirectional switching half-bridge circuit is implemented based on a bidirectional switch including a switching device Q₅ and a switching device Q_{6,} and a lower bridge arm circuit thereof is implemented based on a bidirectional switch including a switching device Q₇ and a switching device Q₈, and a midpoint *C* of the bridge arm is connected to the transformer Tᵣ via a resonant inductor Lᵣ. V_{dc} represents a DC-side power supply voltage, and V_{ac} represents an AC-side grid voltage.

The power switches may also be referred to as power transistors. The power switches involved in the embodiments of the present disclosure may be implemented by, including but not limited to, MOS transistors (Metal-Oxide-Semiconductor Field-Effect Transistors) and IGBTs (Insulated Gate Bipolar Transistors).

Exemplarily, the upper bridge arm circuit corresponds to a resonant capacitor Cₚ, and the lower bridge arm circuit corresponds to a resonant capacitor Cₙ, the resonant capacitor Cₚ and the resonant capacitor Cₙ are connected in series, and a filter circuit includes a filter capacitor Cₒ and a filter impedance Z_{g}. In other examples, the arrangement of the resonant capacitor of the AC-side circuit may be different from that shown in FIG. 2. For example, the AC-side circuit includes one resonant capacitor, and the one resonant capacitor is connected in series with the resonant inductor Lᵣ. The instantaneous current of the resonant inductor described hereinafter in the present disclosure may also be a resonant tank current, that is, the AC-side circuit does not necessarily include the resonant inductor as an electronic component, but the resonant tank current still exists, and the method of the present disclosure is still applicable.

The applicable scenarios of the power converter startup control provided by the embodiments of the present disclosure include, but are not limited to, the following three scenarios.

Scenario 1: a scenario where the power converter is started from a shutdown state, wherein the power converter, upon receiving a startup command, needs to initiate PWM output to operate in grid-connected power generation mode.

Scenario 2: a scenario where, while the power converter is operating in grid-connected power generation mode, upon detecting an abrupt change in the grid voltage, the power converter first blocks the PWM pulses to prevent the abrupt grid voltage from damaging the power converter, and then, upon detecting that the grid voltage has returned to normal, re-initiates PWM output to resume operation. In some embodiments, Scenario 2 is referred to as a low-voltage or high-voltage ride-through scenario.

Scenario 3: a light-load operation scenario of the power converter, wherein in the light-load operation scenario, the power converter is turned off for a period of time after operating for a period of time, and then continues to operate. Exemplarily, the power converter first initiates PWM output and operates for *a* power frequency cycles, then blocks the PWM pulses and stops operation for *b* power frequency cycles, then the power converter initiates PWM output and operates for *a* power frequency cycles, and then blocks the PWM pulses and stops operation for *b* power frequency cycles, and so on. The power converter is started once every (*a+b*) power frequency cycles, so as to improve the operating efficiency of the power converter. *a* and *b* are integers greater than 1. In some embodiments, Scenario 3 is referred to as a burst mode scenario.

In an exemplary embodiment, please refer to FIG. 3, the provided power converter startup control method is used in the power converter shown in FIG. 1. As shown in FIG. 3, the method includes steps 302 to 306.

In Step 302, obtain a grid voltage, an active power command, and a reactive power command corresponding to the power converter.

Obtaining the grid voltage corresponding to the power converter refers to, tracking operating parameters of the grid voltage corresponding to the power converter in real time. Exemplarily, the operating parameters include at least one of a phase of the grid voltage or an instantaneous value of the grid voltage.

In a possible implementation, the grid voltage may be obtained through a voltage sampling circuit. Alternatively, the grid voltage may be obtained through a current transformer and a resistor circuit.

The active power command is used to indicate an active power that the power converter needs to provide after startup.

In a possible implementation, the active power command is determined by the following step: obtaining the active power command based on a maximum power point of an energy device corresponding to the power converter.

Exemplarily, the energy device is a photovoltaic module. Under a current lighting environment, maximum power point tracking (MPPT) control is performed on the photovoltaic module to obtain the maximum power point of the photovoltaic module, and the active power of the power converter is determined based on the maximum power point.

In this possible implementation, determining the active power command based on the maximum power point of the energy device corresponding to the power converter can improve the grid-connection efficiency of the power converter.

In a possible implementation, the active power command is determined by the following step: obtaining the active power command based on a dispatching demand of a power grid system.

Exemplarily, the power converter receives the dispatching command from the power grid, determines the active power to be provided according to the dispatching demand indicated by the dispatching command, and obtains the active power command.

In Step 304, calculate a target startup interval and a current command based on the grid voltage, the active power command, and the reactive power command. The target startup interval is located between a first time threshold and a second time threshold.

In order to reduce the driving loss of the power switches, a resonant circuit is provided in the DC-AC conversion circuit of the power converter, and conditions for soft-switching operation of each power switch are formed through energy exchange between the resonant inductor and the resonant capacitor. However, at the instant when the power converter is just started, the energy exchange process has not yet been established, and the conditions for soft-switching operation with a relatively small driving current cannot be formed for each power switch. At this time, the power switches are subject to an instantaneous current impact at the instant when the power converter starts up. If the startup current is too large, the power switches may be damaged, thus causing operational reliability of the power converter to be reduced.

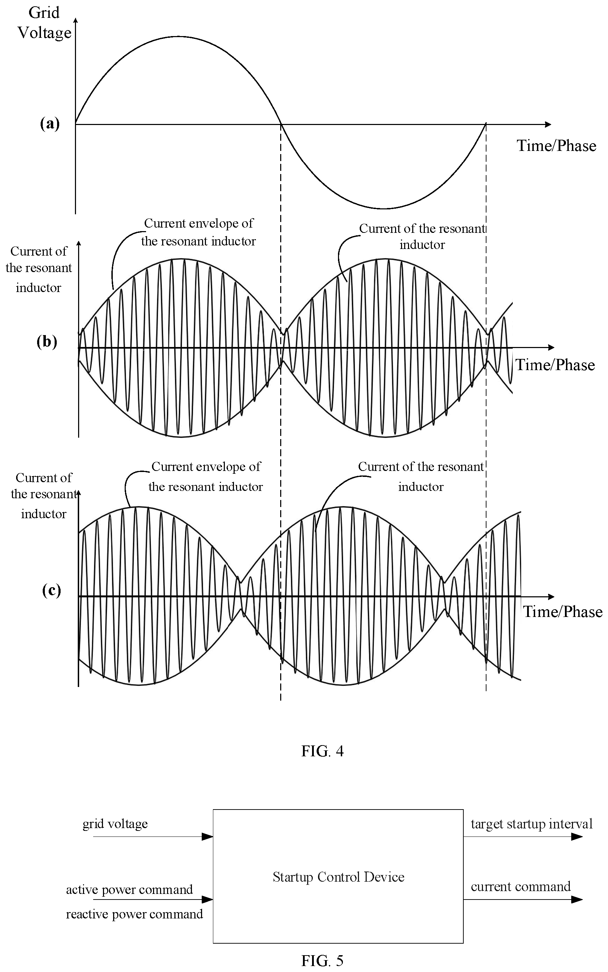

In the absence of reactive power, the amplitude of the current flowing through the resonant inductor of the power converter is positively correlated with the absolute value of the instantaneous grid voltage. Referring to (a) and (b) of FIG. 4. The variation of the amplitude of the current envelope of the resonant inductor is the same as the variation of the instantaneous value of the grid voltage. The larger the absolute value of the instantaneous voltage of the grid voltage, the larger the amplitude of the current envelope of the resonant inductor; and the smaller the absolute value of the instantaneous voltage of the grid voltage, the smaller the amplitude of the current envelope of the resonant inductor. Near a zero-crossing point of the grid voltage, the absolute value of the instantaneous voltage of the grid voltage is relatively small, and the amplitude of the current envelope of the resonant inductor is also relatively small. At the peak or valley moment of the grid voltage, the amplitude of the current envelope of the resonant inductor is relatively large.

In the presence of a reactive power, exemplarily, the relationship between the current envelope amplitude of the resonant inductor of the power converter and the absolute value of the instantaneous grid voltage is shown in (a) and (c) of FIG. 4. Depending on the magnitudes of the reactive power and the active power, there is a certain phase deviation between the waveform of the current envelope of the resonant inductor and the waveform of the grid voltage. That is, when the grid voltage is at its minimum, the amplitude of the current envelope of the resonant inductor is not necessarily at its minimum.

The startup of the power converter is a transient state, and during the startup state, the current needs to be maintained at a relatively small value. If the current is too large, a relatively large current impact will be imposed on the power switches. When the power converter starts up, energy is stored in the inductor. During transmission through the inductor, the energy manifests as the inductor current. Therefore, controlling the startup of the power converter based on the inductor current can more directly reflect the current variation and energy variation of the power converter during startup, thereby making the control more accurate. Moreover, in the embodiment, based on the grid voltage, the active power command, and the reactive power command, the state of reactive power at the instant when the power converter starts up is determined, and the real-time state of the grid voltage is determined, thereby determining a target startup interval in which the amplitude of the resonant inductor current is relatively small. In the case where the reactive power is zero, the target startup interval with a relatively small inductor current amplitude can be determined based on the instant when the instantaneous value of the grid voltage is relatively small. In the case where the reactive power is non-zero, the target startup interval can be determined based on the instant when the instantaneous value of the grid voltage is relatively small, in accordance with the phase deviation. Alternatively, at the instant when the instantaneous value of the grid voltage is relatively small, the reactive current may be first set to zero and then adjusted to the required reactive current after startup. This enables the power converter to start up within a time interval in which the inductor current amplitude is relatively small, thereby reducing the current impact on the power switches during startup of the power converter and improving the reliability of startup operation of the power converter.

The current command refers to the magnitude of the current that the power converter needs to output at startup. The current command includes an active current command and a reactive current command. The active current indicated by the active current command represents the magnitude of the current transmitted by the power converter to the power grid system, and the reactive current indicated by the reactive current command represents the magnitude of the current required within the power converter for the operation of reactive components such as inductors and capacitors. Exemplarily, the AC current indicated in the current command is determined based on a combination of the active current and the reactive current. The power converter needs to operate based on the magnitude of the current indicated in the current command at startup.

In Step 306, start the power converter within the target startup interval and based on the current command.

The power converter is started within the target startup interval and based on the magnitude of the current indicated by the current command.

According to the power converter startup control method provided in the above embodiments, in various startup scenarios of the power converter, upon receiving an externally input startup command or an internally determined startup-enabling command, the power converter is not started directly. Instead, the target startup interval and the current command are determined by tracking the grid voltage, the active power command, and the reactive power command, and the power converter is started within the target startup interval and based on the current command. Exemplarily, referring to FIG. 5, a startup control device is provided in the power converter, and the startup control device includes two input terminals and two output terminals. One input terminal is used for inputting the grid voltage, the other input terminal is used for inputting the active power command and the reactive power command. One output terminal is used for outputting the target startup interval, and the other output terminal is used for outputting the current command. The power converter is started based on the target startup interval and the current command outputted by the startup control device. Starting the power converter within the target startup interval and based on the current command can reduce the current impact on each power switch of the power converter during startup, avoid damage to the power switches, and improve the reliability of startup of the power converter.

Exemplarily, in Scenario 1, the power converter is started from a shutdown state. Upon receiving an externally inputted startup command, the power converter does not directly initiate PWM output, instead, it calculates the target startup interval and the current command based on the obtained grid voltage, active power command, and reactive power command, and starts within the target startup interval based on the current command, thereby preventing the direct startup from occurring at an instant when the instantaneous value of the grid voltage is relatively large, which would otherwise cause a relatively large current in the resonant inductor and result in damage to the power switches. The power converter startup control method provided in the embodiment can improve the startup reliability of the power converter.

Exemplarily, in Scenario 2, after detecting that the grid voltage has returned to normal in a low-voltage or high-voltage ride-through scenario, the power converter does not directly initiate PWM output. Instead, the power converter calculates the target startup interval and the current command based on the obtained grid voltage, active power command, and reactive power command, and starts within the target startup interval based on the current command, thereby avoiding the situation where, at the instant when the grid voltage is detected to have returned to normal, the grid voltage is at a relatively large instantaneous value, and directly starting the power converter would cause a relatively large current in the resonant inductor and result in damage to the power switches. The power converter startup control method provided in the embodiment can improve the startup reliability of the power converter.

Exemplarily, in Scenario 3, the power converter operates in a burst mode scenario. The power converter determines the target startup instant and the current command based on the grid voltage, the active power command, and the reactive power command. For each startup, the power converter selects the instant when the grid voltage instantaneous value is relatively low to start the PWM switching operation, thereby minimizing the current of the resonant inductor as much as possible, reducing the current impact on each power switch at the instant when the power converter starts up, and improving the startup reliability of the power converter.

In an exemplary embodiment, the startup control device to which the power converter startup control method is applied is disposed outside the power converter, that is, independent of the power converter. The startup control device controls the startup of the power converter based on the target startup interval and the current command obtained by the power converter startup control method shown in FIG. 3.

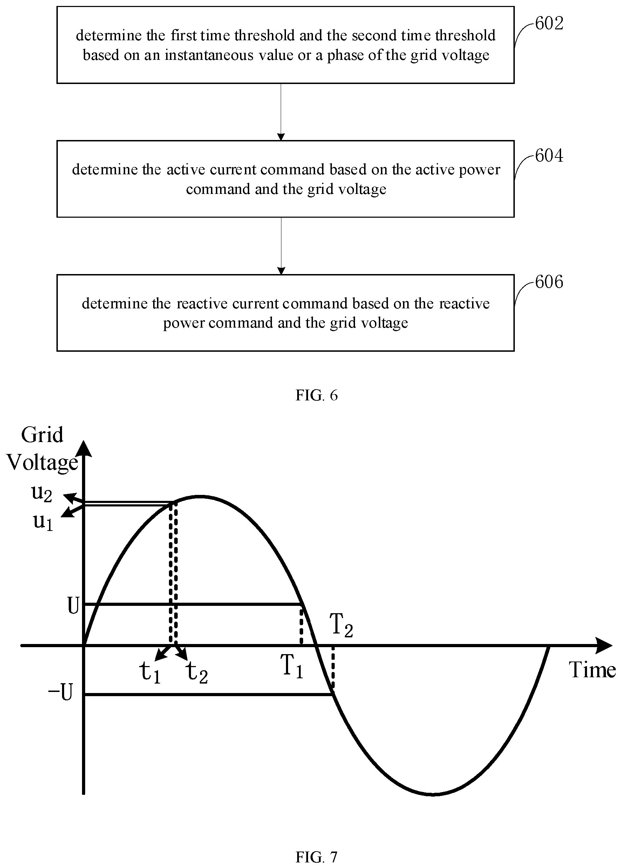

In an exemplary embodiment, in the provided power converter startup control method, the current command includes the active current command and the reactive current command. This embodiment relates to a process of calculating the target startup interval and the current command based on the grid voltage, the active power command, and the reactive power command. Referring to FIG. 6, the process includes:
In Step 602, determine the first time threshold and the second time threshold based on an instantaneous value or a phase of the grid voltage.

By tracking the instantaneous value or the phase of the grid voltage, a time interval in which the instantaneous value of the grid voltage is relatively small is calculated, and the boundary values of the time interval are used as the first time threshold and the second time threshold. The first time threshold corresponds to an instant on a first side of a zero-crossing point of the grid voltage, and the second time threshold corresponds to an instant on a second side of the zero-crossing point of the grid voltage, where the first side and the second side are two sides of the zero-crossing point of the grid voltage, respectively. The target startup interval is a startup interval that includes the zero-crossing point of the grid voltage.

In a possible implementation, the first time threshold and the second time threshold are determined based on the instantaneous value of the grid voltage. Based on the correspondence between the instantaneous value of the grid voltage and the amplitude of the inductor current, it is determined that when the absolute value of the instantaneous value of the grid voltage is less than a voltage threshold U, starting the power converter causes relatively small current impact on the power switches. By tracking the magnitude and variation of the instantaneous value of the grid voltage and based on the voltage threshold u₀, the first time threshold T₁ and the second time threshold T₂ are determined. Exemplarily, referring to FIG. 7, the instantaneous values corresponding to two adjacent sampling moments t₁ and t₂ are u₁ and u₂, respectively, where u₁ is less than u₂, and both u₁ and u₂ are greater than 0. Then it is determined that the grid voltage is currently in a positive half-cycle. The first time threshold T₁ and the second time threshold T₂ are calculated based on the sampling moment t₁ and the corresponding instantaneous value u₁, the power frequency cycle of the grid voltage, and the voltage threshold u₀.

In a possible embodiment, the first time threshold and the second time threshold are determined based on the phase of the grid voltage. The first time threshold T₁ and the second time threshold T₂ are determined by tracking the phase of the grid voltage. Based on the relationship between the instantaneous value of the grid voltage and the phase, a first phase interval and a second phase interval corresponding to startup instants that cause relatively small current impact on the power switches can be determined. By tracking the phase of the grid voltage, the phase of the grid voltage at the current sampling moment, the power frequency cycle of the grid voltage, and the endpoint phases of the first phase interval or the second phase interval are determined, and the first time threshold T₁ and the second time threshold T₂ are calculated. Exemplarily, in the first phase interval [φ1, φ2], φ1 ranges from 168° to 177°, and φ2 ranges from 183° to 192°. Alternatively, φ1 may be 170° or 175°, and φ2 may be 185° or 190°. In the second phase interval [φ3, φ4], φ3 ranges from 348° to 357°, and φ4 ranges from 3° to 12°. Alternatively, φ3 may range from 350° to 355°, and φ4 may range from 5° to 10°.

In Step 604, determine the active current command based on the active power command and the grid voltage.

The magnitude of the active current when the power converter starts up is determined based on a magnitude of the active power indicated by the active power command, the effective value of the grid voltage, and a power factor of the inverter, so as to obtain the active current command.

In Step 606, determine the reactive current command based on the reactive power command and the grid voltage.

The magnitude of the reactive current corresponding to the power converter is determined based on the magnitude of the reactive power indicated by the active power command, the effective value of the grid voltage, and a load power of the inverter, so as to obtain the reactive current command.

The reactive power of the power converter may be zero or non-zero based on the internal settings of the power converter.

In a possible implementation, in the case is that the reactive power of the power converter is zero or proximate to zero, exemplarily, in the case that the reactive power of the power converter is less than a power threshold, it can be considered that the output voltage and the output current of the power converter are in phase, and the current envelope of the resonant inductor and the grid voltage vary in phase.

In this implementation, when the reactive power indicated by the reactive power command is less than or equal to the power threshold, the process of starting the power converter within the target startup interval and based on the current command includes: starting the power converter within the target startup interval and based on a target reactive current indicated by the reactive current command.

When the reactive power indicated by the reactive power command is less than or equal to the power threshold, the calculated target reactive current is equal to zero or approximate to zero.

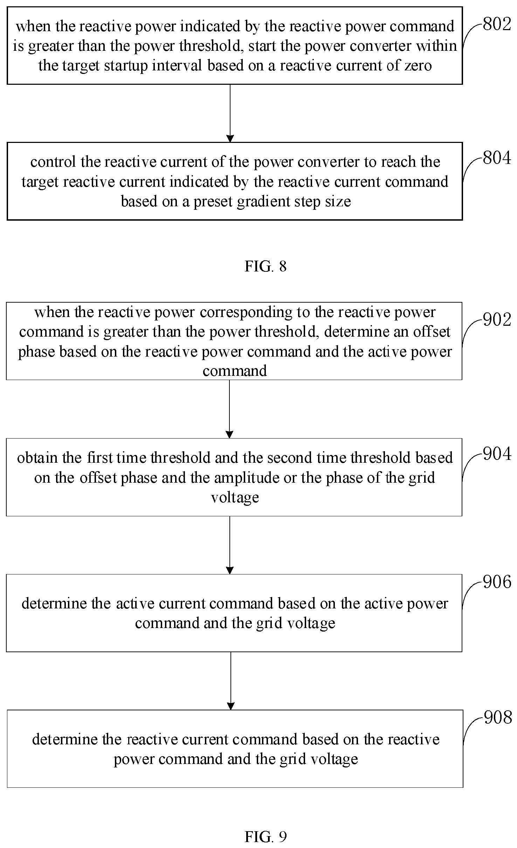

In a possible implementation, when the reactive power of the power converter is greater than or equal to the power threshold, the power converter outputs not only active current but also reactive current. It can be considered that the output voltage and the output current of the power converter are out of phase, and there is a phase deviation between the current envelope of the resonant inductor and the grid voltage. Referring to FIG. 8, in an implementation, the process of starting the power converter within the target startup interval and based on the current command includes Step 802 to Step 804.

In Step 802, when the reactive power indicated by the reactive power command is greater than the power threshold, start the power converter within the target startup interval based on a reactive current of zero.

When the reactive power indicated by the reactive power command is greater than the power threshold, the target reactive current indicated by the determined reactive current command is not zero. If the power converter is started directly based on the target reactive current, the problem of excessive current at the startup instant may still exist. In this implementation, the power converter is started based on the reactive current of zero, thereby avoiding excessive current of the power converter at the startup instant that may cause damage to the power switches.

In Step 804, control the reactive current of the power converter to reach the target reactive current indicated by the reactive current command based on a preset gradient step size.

After the power converter is started, the reactive current of the power converter is gradually increased to the target reactive current based on a preset gradient step size Δi, so as to meet the requirements of the reactive power command of the power converter on the basis of ensuring reliable operation of the power switches. Exemplarily, Δi is used as a reactive current control target of the power converter. When the reactive current of the power converter reaches Δi, 2×Δi is used as the reactive current control target of the power converter. When the reactive current of the power converter reaches 2×Δi, 3×Δi is used as the reactive current control target of the power converter, and so on, until the reactive current of the power converter reaches the target reactive current indicated by the reactive current command.

Exemplarily, the target reactive current is 2A, and 0.1A is used as the preset gradient step size. The reactive current control target of the power converter is gradually increased from 0A in steps of 0.1A until reaching 2A, thereby ensuring the operation reliability of the power switches.

In an exemplary embodiment, referring to FIG. 9, this embodiment relates to a process of calculating the target startup interval and the current command based on the grid voltage, the active power command, and the reactive power command when the reactive power corresponding to the reactive power command is greater than the power threshold. As shown in FIG. 9, the process includes Step 902 to Step 908.

In Step 902, when the reactive power corresponding to the reactive power command is greater than the power threshold, determine an offset phase based on the reactive power command and the active power command.

When the reactive power indicated by the reactive power command is greater than the power threshold, there is a phase deviation between the envelope phase of the current envelope of the resonant inductor and the voltage phase of the grid voltage, as shown in (a) and (c) of FIG. 4. The offset phase obtained based on the magnitude of the reactive power indicated by the reactive power command and the magnitude of active power indicated by the active power command is the above-mentioned phase deviation.

In Step 904, obtain the first time threshold and the second time threshold based on the offset phase and the amplitude or the phase of the grid voltage.

An initial startup interval is determined based on the amplitude or the phase of the grid voltage, and the first time threshold and the second time threshold of the target startup interval are obtained based on the initial startup interval and the offset phase.

In a possible implementation, when the type of reactive power indicated by the reactive power command is an inductive reactive power type, the initial startup interval is shifted backward in chronological order by a duration corresponding to the offset phase, so as to obtain the target startup interval.

In a possible implementation, when the type of reactive power indicated by the reactive power command is an inductivereactive power type, the initial startup interval is shifted forward in chronological order by a duration corresponding to the offset phase, so as to obtain the target startup interval.

In a possible implementation, for the process of determining the initial startup interval based on the amplitude or the phase of the grid voltage, reference may be made to the relevant process in the embodiment corresponding to FIG. 6, which will not be described in detail herein.

In Step 906, determine the active current command based on the active power command and the grid voltage.

In Step 908, determine the reactive current command based on the reactive power command and the grid voltage.

Compared with the embodiment shown in FIG. 8, in this embodiment, when the power converter is started within the target startup interval and based on the current command, the power converter is started directly based on the active current and the reactive current calculated based on the active power command and the reactive power command, without the need for a control process of first starting the power converter based on the reactive current of zero and then gradually adjusting the reactive current to the target reactive current.

In an exemplary embodiment, instantaneous values of resonant tank currents of the AC-side circuit at the first time threshold and at the second time threshold are each less than a current threshold. In a possible implementation, referring to FIG. 2, the AC-side circuit of the power converter to which the power converter control method is applied includes a resonant inductor *Lᵣ*. The instantaneous values of the currents of the resonant inductor *Lᵣ* at the first time threshold and the second time threshold are each less than the current threshold.

The current threshold refers to a current value approximate to zero. Exemplarily, the current threshold is less than 0.1A.

In an exemplary embodiment, a power converter startup control method is provided. The provided power converter startup control method is for use in the power converter shown in FIG. 1. The power converter includes a DC-side circuit, a transformer, and an AC-side circuit. The DC-side circuit includes an actively-driven full-bridge circuit, and the AC-side circuit includes an actively-driven bidirectional switching half-bridge circuit. The method includes Step S1 to Step S7.

In Step S1, obtain a grid voltage, an active power command, and a reactive power command corresponding to the power converter.

Optionally, the active power command is obtained based on a maximum power point of an energy device corresponding to the power converter.

Optionally, the active power command is obtained based on a dispatching demand of a power grid system.

In Step S2, determine the first time threshold and the second time threshold based on an instantaneous value or a phase of the grid voltage.

In Step S3, determine an active current command based on the active power command and the grid voltage.

In Step S4, determine a reactive current command based on the reactive power command and the grid voltage.

In Step S5, when a reactive power indicated by the reactive power command is greater than a power threshold, start the power converter within the target startup interval with a reactive current of zero.

In Step S6, control the reactive current of the power converter to reach a target reactive current indicated by the reactive current command based on a preset gradient step size.

In Step S7, when the reactive power indicated by the reactive power command is less than or equal to the power threshold, start the power converter within the target startup interval and based on the target reactive current indicated by the reactive current command.

It should be understood that although the steps in the flowcharts involved in the above embodiments are sequentially displayed as indicated by arrows, these steps are not necessarily executed sequentially in the order indicated by the arrows. Unless explicitly stated herein, the execution of these steps is not strictly limited in order, and these steps may be executed in other orders or multiple steps may be executed simultaneously. Moreover, at least a part of the steps in the flowcharts involved in the above embodiments may include multiple sub-steps or multiple stages. These sub-steps or stages are not necessarily executed and completed at the same moment, but may be executed at different moments. The execution order of these sub-steps or stages is not necessarily sequential, but may be performed alternately or interchangeably with at least a part of other steps or sub-steps/stages of other steps.

It can be understood that the term "based on" as used in the present application is used to describe one or more factors that influence a determination and does not exclude other factors that may influence the determination. For example, the phrase "determining *A* based on *B*" means that the determination of *A* may be based entirely on or at least in part on factor *B*, that is, *B* is a factor that influences the determination of *A*, but does not exclude that the determination of *A* may also be based on *C*.

An embodiment of the present disclosure further provides a controller. The controller is connected to a power converter. The controller includes a memory and a processor, the memory has a computer program stored thereon, and the processor, when executing the computer program, performs the steps of the method of any one of the embodiments described above.

An embodiment of the present disclosure further provides a power conversion system. The power conversion system includes a power converter and the controller provided in the foregoing embodiments. The power converter includes a DC-side circuit, a transformer, and an AC-side circuit. The DC-side circuit includes an actively-driven full-bridge circuit, and the AC-side circuit includes an actively-driven bidirectional switching half-bridge circuit.

In an embodiment, a computer device is further provided, including a memory and a processor. The memory has a computer program stored thereon, and the processor, when executing the computer program, performs the steps of the method of any one of the embodiments described above.

In an embodiment, a computer-readable storage medium is provided, having a computer program stored thereon. The computer program, when executed by a processor, performs the steps of the method of any one of the embodiments described above.

In an embodiment, a computer program product is provided, including a computer program. The computer program, when executed by a processor, performs the steps of the method of any one of the embodiments described above.

It should be noted that the user information (including but not limited to user device information, user personal information, etc.) and data (including but not limited to data used for analysis, stored data, displayed data, etc.) involved in the present disclosure are all information and data that have been authorized by the user or fully authorized by all relevant parties, and the collection, use, and processing of relevant data shall comply with relevant regulations.

Those of ordinary skill in the art can understand that all or part of the processes in the methods of the above embodiments can be implemented by instructing relevant hardware through a computer program. The computer program can be stored in a non-transitory computer-readable storage medium. The computer program, when executed, can perform the processes of the method of any one of embodiments described above. Any reference to a memory, database, or other media used in the embodiments provided in the present disclosure may include at least one of non-transitory memory and transitory memory. The non-transitory memory may include Read-Only Memory (ROM), magnetic tape, floppy disk, flash memory, optical memory, high-density embedded non-transitory memory, resistive memory (ReRAM), Magneto resistive Random-Access Memory (MRAM), Ferroelectric Random-Access Memory (FRAM), Phase Change Memory (PCM), graphene memory, and the like. Transitory memory may include Random Access Memory (RAM) or external cache memory, etc. By way of illustration and not limitation, RAM may be in various forms, such as Static Random-Access Memory (SRAM) or Dynamic Random-Access Memory (DRAM), etc. The databases involved in the embodiments provided in the present disclosure may include at least one of relational databases and non-relational databases. Non-relational databases may include distributed databases based on blockchain, etc., but are not limited thereto. The processors involved in the embodiments provided in the present disclosure may be general-purpose processors, central processing units, graphics processors, digital signal processors, programmable logic devices, data processing logic devices based on quantum computing, etc., but are not limited thereto.

The technical features of the embodiments above can be combined arbitrarily. For the sake of brevity, not all possible combinations of the technical features in the embodiments above are described. However, as long as there is no contradiction in the combinations of the technical features, these combinations should be considered to be within the scope of the specification.

The embodiments above are merely several implementations of the present disclosure, and the descriptions thereof are relatively specific and detailed, but should not be construed as limiting the scope of the patent application. It should be noted that, for those of ordinary skill in the art, various variations and improvements can be made without departing from the concept of the present disclosure, and these variations and improvements all fall within the protection scope of the present disclosure. Therefore, the protection scope of the present disclosure should be subject to the appended claims.

## Claims

1. A power converter startup control method, wherein the method comprises:
obtaining a grid voltage, an active power command, and a reactive power command corresponding to the power converter;
calculating a target startup interval and a current command based on the grid voltage, the active power command, and the reactive power command, and the target startup interval being located between a first time threshold and a second time threshold; and
starting the power converter within the target startup interval and based on the current command.

2. The method according to claim 1, wherein the current command comprises an active current command and a reactive current command, and wherein calculating the target startup interval and the current command based on the grid voltage, the active power command, and the reactive power command comprises:
determining the first time threshold and the second time threshold based on an instantaneous value or a phase of the grid voltage;
determining the active current command based on the active power command and the grid voltage; and
determining the reactive current command based on the reactive power command and the grid voltage.

3. The method according to claim 1 or 2, wherein starting the power converter within the target startup interval and based on the current command comprises:
starting the power converter within the target startup interval with a reactive current of zero when a reactive power indicated by the reactive power command is greater than a power threshold; and
controlling the reactive current of the power converter to reach a target reactive current indicated by the reactive current command based on a preset gradient step size.

4. The method according to any one of claims 1 to 3, wherein starting the power converter within the target startup interval and based on the current command comprises:
starting the power converter within the target startup interval and based on a target reactive current indicated by the reactive current command when a reactive power indicated by the reactive power command is less than or equal to a power threshold.

5. The method according to any one of claims 1 to 4, wherein the current command comprises an active current command and a reactive current command; and calculating the target startup interval and the current command based on the grid voltage, the active power command, and the reactive power command comprises:
determining an offset phase based on the reactive power command and the active power command when a reactive power corresponding to the reactive power command is greater than a power threshold;
obtaining the first time threshold and the second time threshold based on the offset phase and an amplitude or a phase of the grid voltage;
determining the active current command based on the active power command and the grid voltage; and
determining the reactive current command based on the reactive power command and the grid voltage.

6. The method according to any one of claims 1 to 5, wherein the method further comprises:
obtaining the active power command based on a maximum power point of an energy device corresponding to the power converter.

7. The method according to any one of claims 1 to 6, wherein the method further comprises:
obtaining the active power command based on a dispatching demand of a power grid system.

8. The method according to any one of claims 1 to 7, wherein the power converter comprises a direct current (DC)-side circuit, a transformer, and an alternating current (AC)-side circuit, wherein:
the DC-side circuit comprises an actively-driven full-bridge circuit; and
the AC-side circuit comprises an actively-driven bidirectional switching half-bridge circuit.

9. The method according to claim 8, wherein instantaneous values of resonant tank currents of the AC-side circuit at the first time threshold and at the second time threshold are each less than a current threshold.

10. A controller, wherein the controller is connected to the power converter and comprises a memory and a processor, the memory has a computer program stored thereon, and the processor, when executing the computer program, performs steps of the method according to any one of claims 1 to 9.

11. A power conversion system, comprising the power converter and the controller according to claim 10, wherein the power converter comprises a DC-side circuit, a transformer, and an AC-side circuit; the DC-side circuit comprises an actively-driven full-bridge circuit; and the AC-side circuit comprises an actively-driven bidirectional switching half-bridge circuit.
